# EUROPEAN PATENT APPLICATION

(11) **EP 3 244 469 A1**
(43) Date of publication of application: **15.11.2017**
(21) Application number: 17170620.3
(22) Date of filing: 11.05.2017
(51) Int. Cl.: H01M 2/16, H01M 10/052, D04H 1/067, D04H 1/28, D04H 1/425, D04H 1/4258

(54) **METHOD OF PRODUCING CELLULOSE NONWOVEN FABRIC, CELLULOSE NONWOVEN FABRIC PRODUCED THEREBY, AND SECONDARY ION BATTERY INCLUDING THE SAME**

(30) Priority: 11.05.2016 KR 20160057815; 18.05.2016 KR 20160060903
(71) Applicant: Samsung Electronics Co., Ltd., Gyeonggi-do 16677 (KR)
(72) Inventor: KIM, Minsang, 16678 Suwon-si (Gyeonggi-do) (KR); BYUN, Jongwon, 16678 Suwon-si (Gyeonggi-do) (KR); CHUNG, Soonchun, 16678 Suwon-si (Gyeonggi-do) (KR); LEE, Sunghaeng, 16678 Suwon-si (Gyeonggi-do) (KR); KANG, Jinkyu, 16678 Suwon-si (Gyeonggi-do) (KR); PARK, Jinhwan, 16678 Suwon-si (Gyeonggi-do) (KR)
(74) Representative: Grünecker Patent- und Rechtsanwälte PartG mbB

(57) **Abstract**

A method of producing a cellulose nonwoven fabric, a cellulose nonwoven fabric produced thereby, and a secondary ion battery including the same, wherein the method includes passing a cellulose suspension with microbial cellulose and a water-soluble cellulose disintegrating agent in a medium through an orifice of a high-pressure homogenizer to obtain a cellulose dispersion and removing the medium from the obtained cellulose dispersion to form the nonwoven fabric.

## Description

### BACKGROUND

### 1. Field

The present disclosure relates to a method of producing a cellulose nonwoven fabric, a cellulose nonwoven fabric produced thereby, and a secondary ion battery including the same.

### 2. Description of the Related Art

Nonwoven fabrics are planar fiber structures generally prepared by entangling any kind of fibers such as natural fibers, synthetic fibers, glass fibers, metal fibers, etc., into the form of a sheet-like web, and then binding them either mechanically or physically.

In recent years, nonwoven fabrics have been widely used in industry and commerce. As the uses, features and functions of nonwoven fabrics have begun to be known to the end users, a variety of uses of the nonwoven fabrics have been created.

Particularly, out of all the natural fibers, cellulose fibers are a particularly abundant bio-resource on Earth, and have used by mankind for several thousand years as a low-cost and renewable material that can be repeatedly recycled according to the natural system of generation, degradation and consumption.

Nonwoven fabrics can be used as a separator in an ion battery, a filter material, a wound dressing bandage, and to form a composite with a resin.

Separators prevent any contact between a positive electrode and a negative electrode in a battery. In view of the increasing energy density of batteries, dependence on separators has increased in relation to battery safety. Safe separators are needed for the development of high capacity and high power output lithium batteries.

Generally, separators are made of olefin-based polymers such as polyethylene or polypropylene. When the olefin-based polymers are used in lithium batteries for electric vehicles, the lithium batteries may experience a thermal runaway event due to low heat resistance, resulting in breakdown thereof. For this reason, separators having high heat resistance have been developed, and a technique of coating an olefin-based polymer separator with a ceramic material having high heat resistance has been suggested. However, this technique increases the price of separators.

Further, use of lignocelluloses has been studied, but a safety problem occurs since the poor tensile strength of lignocelluloses reduces the durability of a lithium ion battery against external impacts. Accordingly, there is a need for high-strength cellulose nonwoven fabric made of cellulose materials and having improved heat resistance.

### SUMMARY

An aspect provides a method of producing a cellulose nonwoven fabric, the method including passing a cellulose suspension including a microbial cellulose and a disintegrating agent in a medium through an orifice of a high-pressure homogenizer to obtain a cellulose dispersion, in which the disintegrating agent is a water-soluble cellulose; and removing the medium from the obtained cellulose dispersion to form a nonwoven fabric.

Another aspect provides a cellulose nonwoven fabric produced by the method.

Another aspect provides a secondary ion battery including the nonwoven fabric produced by the method.

### BRIEF DESCRIPTION OF THE DRAWINGS

These and/or other aspects will become apparent and more readily appreciated from the following description of the embodiments, taken in conjunction with the accompanying drawings in which:

### FIG. 1 shows a general valve assembly;

FIGS. 2A-D each shows the shape and diameter distribution of defibrated CNF according to a CMC content, wherein FIG. 2A, 2C, 2E and 2G provides a photomicrograph, respectively, and FIG. 2B, 2D, 2F and 2H provides a graph of fiber count plotted against diameter; and

FIGS. 3A-D each shows the shape and diameter distribution of defibrated CNF according to the number of passes through HPH, wherein FIG. 3A, 3C, 3E and 3G provides a photomicrograph, respectively, and FIG. 3B, 3D, 3F and 3H provides a graph of fiber count plotted against diameter.

### DETAILED DESCRIPTION

An aspect provides a method of producing a cellulose nonwoven fabric, the method including passing a cellulose suspension including a microbial cellulose and a disintegrating agent in a medium through an orifice of a high-pressure homogenizer to obtain a cellulose dispersion, in which the disintegrating agent is a water-soluble cellulose, wherein passing the cellulose suspension is performed while applying pressure thereto, wherein the pressure is about 10 MPa to about 300 MPa; and removing the medium from the obtained dispersion to form a nonwoven fabric.

The microbial cellulose may be a cellulose derived from a bacterium. The bacterium may, for instance *Acetobacter, Gluconacefobacfer, Enterobacter, Achromobacter, Agrobacterium, Alcaligenes, Azotobacter, Pseudomonas, Rhizobium, Sarcina, Klebsiella,* or *Escherichia.* A specific example of the bacterium may be *Gluconacetobacter xylinum* (G. xylinum).

The microbial cellulose may be a non-chemically modified microbial cellulose, which is obtained by culturing the microorganism. The microbial cellulose may be in the form of a cellulose pellicle that exists at the interface of a culture medium and air when harvested, or in a sectioned form thereof. In some embodiments, the microbial cellulose does not include substantial amounts of lignin or hemicellulose.

The disintegrating agent may have a property of inhibiting bonding between cellulose fibrils. The bonding may be non-covalent bonding such as hydrogen bonding. The disintegrating agent may be a water-soluble cellulose. The water-soluble cellulose may be any cellulose as long as it is soluble in water. The water-soluble cellulose may be a cellulose dissolving in water with no sharp solubility limit. The water-soluble cellulose may be dispersed in the water without lumping. The water-soluble cellulose may be selected from the group consisting of CMC, 2-hydroxyethyl cellulose, water-soluble cellulose ether, and Alco gum. Preferably, the water-soluble cellulose is selected from the group consisting of CMC, 2-hydroxyethyl cellulose, and water-soluble cellulose ether.

The disintegrating agent may be included in an amount of 1% or more, for example, 1% to 200%, 1.5% to 200%, 5% to 200%, 10% to 200%, 30% to 200%, 40% to 200%, 50% to 200%, 50% to 190%, 50% to 180%, 50% to 170%, 1.5% to 200%, 1.5% to 190%, 1.5% to 180%, or 1.5% to 170% by weight, based on the weight of microbial cellulose in the suspension. The disintegrating agent may have a molecular weight of about 30,000 Da to about 500,0000 Da, about 30,000 Da to about 300,0000 Da, about 30,000 Da to about 200,0000 Da, about 30,000 Da to about 100,0000 Da, about 60,000 Da to about 500,0000 Da, about 60,000 Da to about 300,0000 Da, or about 60,000 Da to about 100,0000 Da, The disintegrating agent may be CMC having a molecular weight of about 60,000 Da to about 500,0000 Da, about 60,000 Da to about 400,0000 Da, about 60,000 Da to about 300,0000 Da, about 60,000 Da to about 250,0000 Da, about 70,000 Da to about 500,0000 Da, about 70,000 Da to about 400,0000 Da, about 70,000 Da to about 300,0000 Da, about 70,000 Da to about 250,0000 Da, about 80,000 Da to about 500,0000 Da, about 80,000 Da to about 400,0000 Da, about 80,000 Da to about 300,0000 Da, about 80,000 Da to about 250,0000 Da, about 90,000 Da to about 500,0000 Da, about 90,000 Da to about 400,0000 Da, about 90,000 Da to about 300,0000 Da, or about 90,000 Da to about 250,0000 Da. The microbial cellulose may be included in an amount of 0.1% by weight to 1.0% by weight, based on the total weight of the suspension. The molecular weight may be weight average molecular weight.

The medium may be an aqueous or organic solvent. Thus, the cellulose suspension may be an aqueous or organic solvent suspension. Preferably, the medium is an aquous medium. The aqueous medium may be water or an aqueous buffer.

In the step of "passing", the suspension may be subjected to pressure drop during passing the orifice. The pressure drop may be about 10 MPa or more, about 30 MPa or more, or about 50 MPa or more. The pressure drop may be, for example, about 10 MPa to about 300 MPa, about 20 MPa to about 300 MPa, about 20 MPa to about 200 MPa, about 20 MPa to about 100 MPa, about 20 MPa to about 70 MPa, about 20 MPa to about 60 MPa, about 30 MPa to about 60 MPa, about 50 MPa to about 300 MPa, about 50 MPa to about 300 MPa, about 50 MPa to about 200 MPa, or about 50 MPa to about 100 MPa. Further, the suspension may be subjected to a shearing action, followed by a bombardment against a solid surface.

Passing the cellulose suspension through an orifice of a high-pressure homogenizer may convert the cellulose into a cellulose nanofiber (CNF) without chemical change of the starting material cellulose. As used herein, the cellulose nanofiber (CNF) is also called fibril cellulose, nanofibrillated cellulose, nanofibrillar cellulose (NFC), or nanocellulose. In an embodiment, the cellulose nanofiber is not chemically degraded by the above process and its degree of polymerization remains substantially unchanged. On the other hand, the cellulose nanofiber may have a higher degree of fibrillation and greater accessibility than cellulose nanofibers obtained by other process. In addition, in both aqueous and organic solvents, the cellulose nanofiber achieves a "gel-point" after the passage, namely, repeated passage through the fibrillating process. The gel-point may be a critical point in the process at which the cellulose suspension rapidly thickens to a more viscous consistency. The suspension is thereafter substantially stable even after prolonged storage. The substantially stable suspension means a suspension which upon dilution to 0.5% and upon standing for 1 hour, maintains 60% or more of its original volume, i.e., contains 40% or more of clear liquid. Normally, the suspension according to an aspect will maintain 80% or more of its original volume. The passing may be repeated until the cellulose suspension becomes the substantially stable suspension. The passing may be repeated about once to about 50 times, about once to about 40 times, about once to about 30 times, about once to about 20 times, or about once to about 10 times, or a plurality of times, for example, about twice to about 50 times, about twice to about 40 times, about twice to about 30 times, about twice to about 20 times, or about twice to about 10 times.

The passing may be performed under a pressure-applied condition. The pressure may be about 10 MPa or more, about 30 MPa or more, or about 50 MPa or more. The pressure may be, for example, about 10 MPa to about 300 MPa, about 20 MPa to about 300 MPa, about 20 MPa to about 200 MPa, about 20 MPa to about 100 MPa, about 20 MPa to about 70 MPa, about 20 MPa to about 60 MPa, about 30 MPa to about 60 MPa, about 50 to about 300 MPa, about 50 MPa to about 300 MPa, about 50 MPa to about 200 MPa, or about 50 MPa to about 100 MPa.

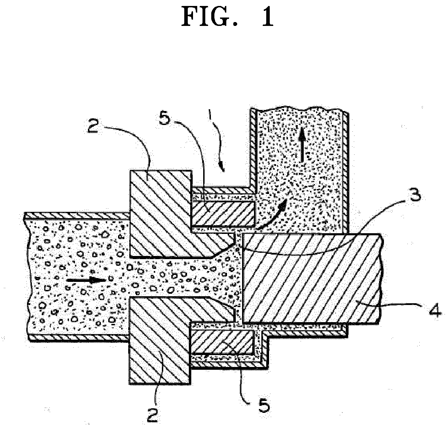

In the above process, the high velocity shearing action may be a right angle shearing action. The high-pressure homogenizer may have an orifice. The orifice may have a small diameter. The diameter may be about 1 µmto about 1000 µm, for example, about 1 µmto about 500 µm, about 1 µmto about 300 µm, about 1 µmto about 100 µm, about 1 µmto about 50 µm, about 1 µmto about 30 µm, or about 1 µmto about 20 µm. The orifice may be an orifice of a microchannel. The microchannel may have a length of about 1 µmto about 1000 µm, for example, about 10 µmto about 1000 µm, about 50 µmto about 1000 µm, about 50 µmto about 500 µm, about 50 µmto about 300 µm, about 1 µmto about 500 µm, or about 1 µmto about 300 µm. The length of the microchannel may be about 1.5 times or more, about 2 times or more, or about 3 times or more than its diameter. The high-pressure homogenizer may be a commercially available high-pressure homogenizer that is used in the preparation of emulsions and suspensions, for example, Manton-Gaulin homogenizer or Nano Disperser (Ilshin Autoclave, ISA-NH500, Korea). In such a device, energy is applied to a low viscosity suspension by a high velocity flow through a restricted area. The heart of such a device may be a homogenizer valve and valve-seat assembly which is attached to a discharge end of a high pressure pump. FIG. 1 shows a general valve assembly. As indicated by the arrows, a liquid suspension enters a valve seat 2 of the valve assembly 1. At this point, the liquid is at a high pressure and a low velocity. As the liquid advances to a small diameter orifice 3 formed in a close clearance area between the valve 4 and valve seat 2, there is a very rapid increase in velocity up to as high as 2100 m/s, depending on the operating pressure. The pressure drop is measured from the entrance to the exit side of orifice 3. As the suspension emerges from between the valve and the valve seat, it impinges on an impact ring 5 surrounding the orifice, resulting in a high velocity decelerating impact. The orifice 3 must be small enough to create the required shearing action but must be larger than the fiber diameter. The high-pressure homogenizer may include high pressure pump, wherein the high pressure pump includes a microchannel, valve and valve seat assembly which is attached to a discharge end of the microchannel, and an impact ring surrounding an orifice which is formed between the valve and valve seat.

The method includes removing the medium from the obtained dispersion to form a nonwoven fabric. The removing the medium may include at least one selected from the group consisting of evaporating, filtrating, centrifuging, and compressing the obtained cellulose dispersion, thereby removing the medium. The removing includes decreasing the content of medium in the cellulose dispersion so as to form a cellulose nonwoven fabric. The medium may be a solvent (such as water or aqueous buffer), which can be dried. The drying may include heating the cellulose dispersion. The removing the medium may be compressing of the obtained dispersion with a high pressure, and then drying the dispersion. The method may further include shaping the obtained cellulose dispersion in to a desired shape. The desired shape comprises a sheet or a film. The shaping may include coating the obtained cellulose dispersion on to a substrate to form a sheet. The thickness of the sheet may be controlled by adjusting the amount the cellulose dispersion coated. The sheet may have a thickness of about 5 µm to about 100 µm, about 5 µm to about 50 µm, about 5 µm to about 30 µm, about 5 µm to about 20 µm, about 5 µm to about 15 µm, about 10 µm to about 100 µm, about 10 µm to about 80 µm, about 10 µm to about 50 µm, about 10 µm to about 40 µm, or about 10 µm to about 30 µm.

The substrate may be flat surface such as a surface of a well in a plate. The coating may be spreading of the obtained dispersion on a surface to form a film on the surface. The film may be dried to form a cellulose nonwoven fabric.

The method may further include mixing the dispersion with a pore forming agent in an aqueous medium in order to control porosity of the nonwoven fabric before the step of "removing". The aqueous medium may be water or an aqueous buffer. The pore forming agent may be one or more selected from the group consisting of polyalkylene glycol such as polyethylene glycol (PEG), polypropylene alcohol, polypropylene, and hydroxycellulose. Further, the nonwoven fabric may be dispersed in a solvent to form pores in the nonwoven fabric. The solvent may be an organic solvent or water. The organic solvent may be alcohol, such as ethyl alcohol. Further, the nonwoven fabric and the pore forming agent may be dispersed in the solvent such as toluene to form pores in the nonwoven fabric.

The method may include removing of the disintegrating agent from the cellulose dispersion. The removing may be performed, prior to the removing the medium from the cellulose dispersion. The removing of the disintegrating agent may be dialysis, washing with a washing solvent, or centrifugation. The washing may be performed using water or other organic solvents. The method may also include removing of the pore forming agent from the cellulose nonwoven fabric formed. For example, PEG used as pore forming agent may be removed by washing with a organic solvent such as toluene. During the washing, centrifugation or filtration may be performed.

Another aspect provides a cellulose nonwoven fabric produced by the method.

The cellulose nonwoven fabric produced by the above method may be a sheet-shaped membrane. The membrane may be used in the separator that separates a negative electrode and a positive electrode in a secondary ion battery.

The cellulose nonwoven fabric or separator may have a porosity of about 30% to about 99%, for example, about 30% to about 70%, about 30% to about 60%, about 45% to about 90%, about 50% to about 80%, or about 60% to about 70%. The separator may have a largest pore of about 1.0 µm or less, for example, about 0.5 µm or less, about 0.1 µm to about 1.0 µm, or about 0.1 µm to about 0.5 µm.

The cellulose nonwoven fabric or separator may have air permeability of about 1 sec/100 cc to about 2000 sec/100 cc, for example, about 1 sec/100 cc to about 1000 sec/100 cc, about 50 sec/100 cc to about 1000 sec/100 cc, about 50 sec/100 cc to about 2000 sec/100 cc, about 100 sec/100 cc to about 2000 sec/100 cc, about 200 sec/100 cc to about 2000 sec/100 cc, about 300 sec/100 cc to about 2000 sec/100 cc, about 100 sec/100 cc to about 1000 sec/100 cc, or about 100 sec/100 cc to about 500 sec/100 cc. The air permeability may be determined by a method known to those skilled in the art, for example, ASTM D726 or Permeability Tester.

The microbial cellulose nanofiber may have a weight average degree of polymerization (DPw) of about 4000 to about 20,000, for example, about 5000 to about 20,000, about 6000 to about 20,000, or about 6100 to about 20,000.

The cellulose nanofiber may have an average diameter of about 1 nm to about 100 nm, for example, about 2 nm to about 100 nm, about 3 nm to about 100 nm, about 4 nm to about 100 nm, about 10 nm to about 50 nm, about 10 nm to about 40 nm, about 20 nm to about 50 nm, about 20 nm to about 40 nm, about 4 nm to about 50 nm, about 4 nm to about 40 nm, or about 15 nm to about 50 nm. The average diameter of the cellulose nanofiber may be measured by diameter of 100 to 200 cellulose nanofibers and then obtain an average thereof.

The cellulose nonwoven fabric or separator including the cellulose nanofiber including the microbial cellulose may have a tensile strength of about 39 MPa to about 290 MPa. The cellulose nanofiber may have a tensile strength of about 39 MPa to about 290 MPa, for example, about 49 MPa to about 290 MPa, or about 54 MPa to about 290 MPa. The tensile strength may be a strength at the time when the cellulose nonwoven fabric or separator is torn by applying a force. The tensile strength may be measured by a method known to those skilled in the art. The tensile strength may be measured by, for example, a text analyzer, a universal testing machine, or an injector. The tensile strength may be measured in accordance with ASTM D882.

The cellulose nonwoven fabric or separator may have an average thickness of about 5 µm to about 100 µm, about 5 µm to about 50 µm, about 5 µm to about 30 µm, about 5 µm to about 20 µm, about 5 µm to about 15 µm, about 10 µm to about 100 µm, about 10 µm to about 80 µm, about 10 µm to about 50 µm, about 10 µm to about 40 µm, or about 10 µm to about 30 µm.

Still another aspect provides a secondary ion battery, for example, a lithium ion battery including the cellulose nonwoven fabric as a separator produced by the above method. A structure of the secondary battery is not particularly limited, but the secondary battery may include all kinds of battery such as a prismatic type, a cylindrical type, a pouch-type, a coin-type, etc. Further, an active material used in the positive electrode and the negative electrode is not particularly limited. For example, the secondary battery may be a lithium ion secondary battery using lithium as the active material. The secondary battery may include a positive electrode; a negative electrode; an electrolyte; and the separator between the positive electrode and the negative electrode. The electrolyte may be included in a positive electrode chamber, of which at least part is defined by the positive electrode and the separator, and a negative electrode chamber, of which at least part is defined by the negative electrode and the separator.

According to the method of producing the cellulose nonwoven fabric or a separator of an aspect, the cellulose nonwoven fabric or a separator may be produced efficiently.

According to the lithium ion battery including the cellulose nonwoven fabric or a separator of another aspect, the lithium ion battery is stable and has excellent charge/discharge efficiency.

### Example 1: Production of Microbial Cellulose and Production of cellulose nonwoven fabric such as a Separator including Microbial Cellulose

### 1. Production of Microbial cellulose

A wild-type strain, *Gluconacetobacter xylinum* was transferred to 100 ml of Hestrin-Schramm (HS) medium in a 250-ml flask, followed by static culture at 30°C for 2 weeks. The HS medium included 20 g/L of glucose, 5 g/L of bacto-peptone, 5 g/L of yeast extract, 2.7 g/L of Na₂HPO₄, 1.15 g/L of citric acid, and 20 mM acetate in water.

### 2. Defibration of Microbial Cellulose

The microbial cellulose produced by static culture was subjected to defibration or disintegrating by the following method.

In detail, the resulting cellulose pellicle was harvested and washed with distilled water three times, followed by heating with a 2% NaOH aqueous solution at 121 °C for 15 minutes. Cells and impurities present in the cellulose pellicle were hydrolysed, followed by washing with distilled water. Thus, a purified cellulose pellicle was obtained. 400 g (0.9 wt%) of the purified cellulose pellicle was cut in a proper size, and then mixed with 600 mL of distilled water containing 6 g of carboxymethylcellulose (CMC)(Mw=90,000) as a disintegrating agent(CMC/CNF (wtlwt)=1.67), and pre-homogenized by beating using a homogenizer (WiseTis®, Wisd Laboratory instruments) to prepare 1000 mL of a 0.36 wt% cellulose suspension.

The cellulose suspension thus obtained was passed through a microchannel (Interaction chamber, length of 200 um) of a high pressure homogenizer, Nano Disperser (Ilshin autoclave, ISA-NH500, Korea) under 150 MPa 10 times (hereinbelow, referred to as "HPH10p w CMC") to obtain a slurry-type cellulose nanofiber (CNF) suspension. The pressure after passing through the microchannel becomes lower than the internal pressure of the microchannel, that is, a pressure drop occurs, because a space before and after the microchannel is wider than the microchannel. The cellulose nanofiber suspension passed through the microchannel was washed with distilled water three times by centrifugation. As a result, water-soluble CMC was removed to finally obtain a concentrated cellulose nanofiber suspension. To compare the CMC effect upon defibration, a control group was prepared in the same manner, except that 200 g of cellulose pellicle was added to 800 mL of distilled water without CMC. As a result, cellulose nanofiber (CNF) was obtained (hereinbelow, referred to as "HPH10p wo CMC").

### 3. Production of nonwoven fabric sheet

A CNF dispersion obtained by defibration as explained in section 2 was used to produce a nonwoven fabric sheet that can be used as a separator through the following process. 0.4 g of a 1 wt% CMC solution (OD 1% viscosity=3300∼5800 mPa·s) and 0.141 g of polyethylene glycol (PEG, a number average molecular weight (Mn)=6,000) were added to a 0.5wt% CNF dispersion (39.46 g), which was diluted with water at a concentration of 0.5 wt%, followed by agitation at room temperature and 600 rpm for 1 hour. 13.8 g of the dispersion was poured in a Petri dish having a diameter of 100 mm and being made of TPX, and dried in a hot plate at 90°C for 2 hours to remove the water. A cellulose nanofiber film (hereinafter, also called "nonwoven fabric") formed on the Petri dish was immersed by addition of toluene, and washed with toluene four times to five times to prepare a PEG-removed nonwoven fabric, which was dried at room temperature for 3 to 4 hours to remove toluene.

**[Table 1]**

| Property | Sample | |
|---|---|---|
| | HPH 10P wo CMC | HPH 10P w CMC |
| Thickness (µm) | 15 | 12 |
| Porosity (%) | 47 | 46 |
| Air permeability (s/100 cc) | 1205 | 910 |
| Tensile strength (MPa) | 45 | 163 |

As shown in Table 1, when a high-pressure homogenizer (HPH) process was performed by adding CMC as the disintegrating agent, a network structure of CNF formed by a microorganism was maintained, and therefore, CNF shows porosity having a proper air permeability of 1000 s/100cc or less and a high tensile strength of 100 MPa or more.

In Table 1, thickness was measured by a micrometer (Mitutoyo, ID-C112CMXB). Further, for the measurement of tensile strength, the produced nonwoven fabric sheet, e.g., a separator was prepared in a size of 15 mm x 50 mm, and the sample was stretched using a universal testing machine ((LLOYD) instrument (LS1)) at a rate of 5 mm/min to determine the tensile strength which is a stress at break.

Further, for the measurement of porosity and air permeability, porosity of the produced nonwoven fabric sheet was calculated by a weight measurement method according to the following equation. The used equation was porosity(%) = [1-{(weight of sample (g))/(volume of sample (cm³))/1.6(g/cm³)}]x100. Herein, 1.6 g/cm³ represents a density of cellulose fiber. Further, air permeability of microbial cellulose was measured by a permeability tester (TOYOSEKI CO. Ltd., G-B3). Air permeability is expressed in terms of the gurley value. The gurley value is the period of time (sec) that is needed for 100 cc of air to permeate the nonwoven fabric sheet, and is an index widely used for quantitative analysis of the pore structure of the nonwoven fabric sheet, e.g., separator. When pores of the nonwoven fabric sheet or separator are well formed, air easily permeates to show a low gurley value.

### 4. Properties of CNF according to Content of Disintegrating Agent

A defibrated cellulose, that is, cellulose nanofiber (CNF) was obtained in the same manner as Section 2, except that CMC of Mw=250,000 was added as the disintegrating agent at a ratio of CMC/CNF(wt/wt) of 0-1.67.

**[Table 2]**

| Property | CMC/CNF(wt/wt) | | | |
|---|---|---|---|---|
| | 0 | 0.056 | 0.56 | 1.67 |
| CNF diameter (nm) | 38±31 | 48±36 | 33±17 | 34±18 |
| Zeta potential (mV) | -5.9±0.7 | -6.9±0.7 | -38.9±0.3 | -45.9±1.2 |

As shown in Table 2, it was found that after 10 passes through the microchannel of HPH, cellulose was defibrated into CNF having a uniform diameter according to the addition amount of CMC (0.56 or more). Further, zeta potential measurement showed that CMC bound to CNF to lower a surface charge value, indicating improvement of dispersity of CNF in the dispersion.

In Table 2, the diameter was determined by examining 100 to 200 fibers in a transmission electron microscopy (TEM) image. Further, the zeta potential was measured using a Zetasizer Nano Zs from Malvern Instruments at a CNF concentration of 0.05wt%.

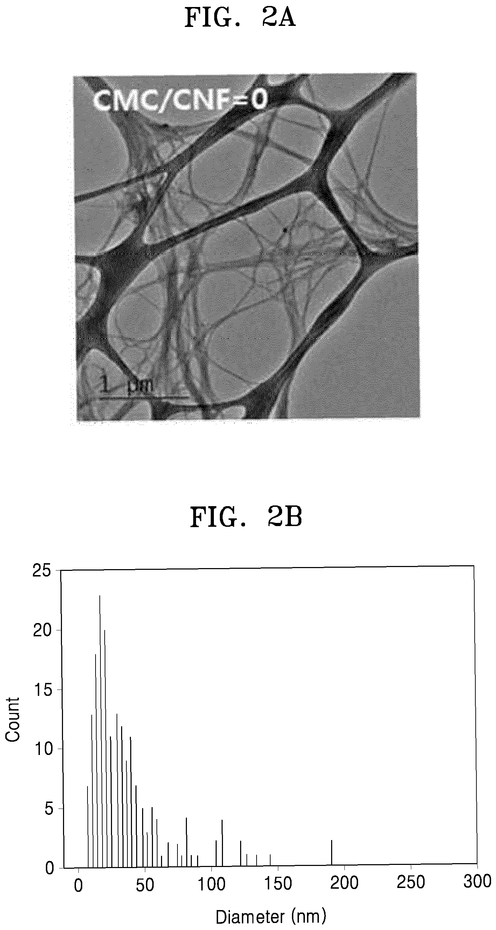

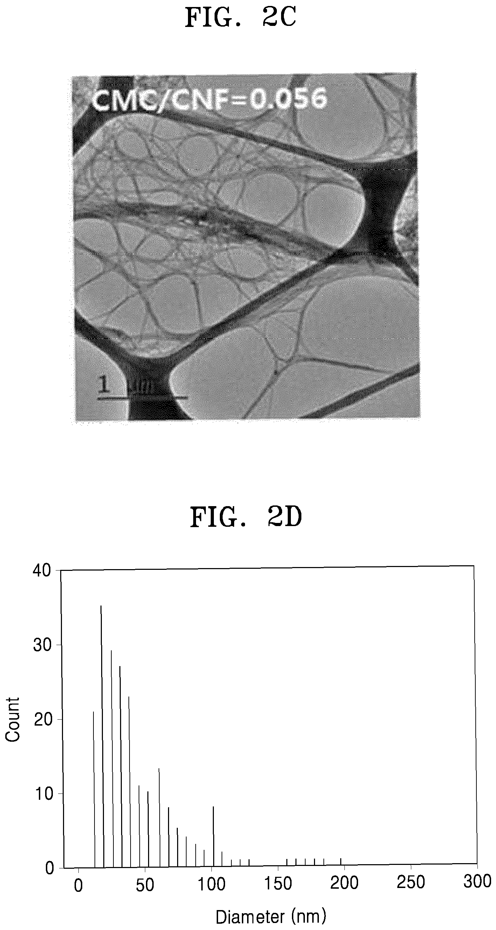

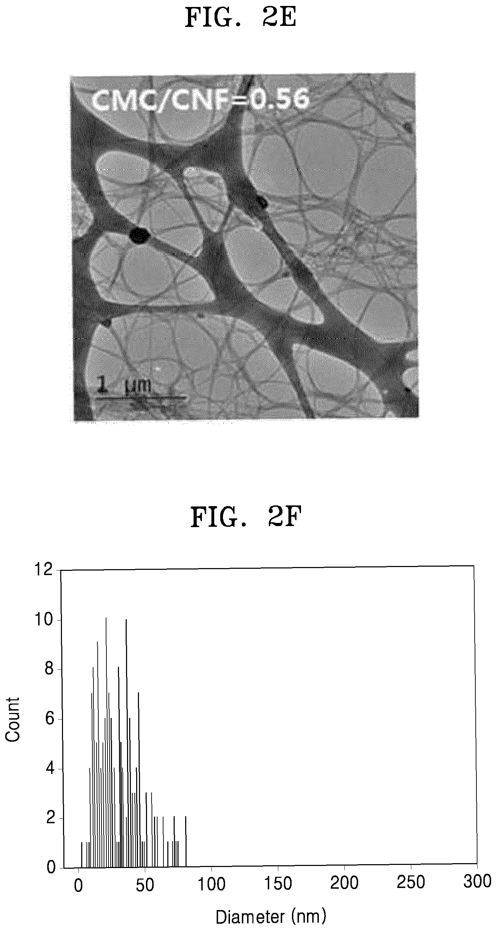

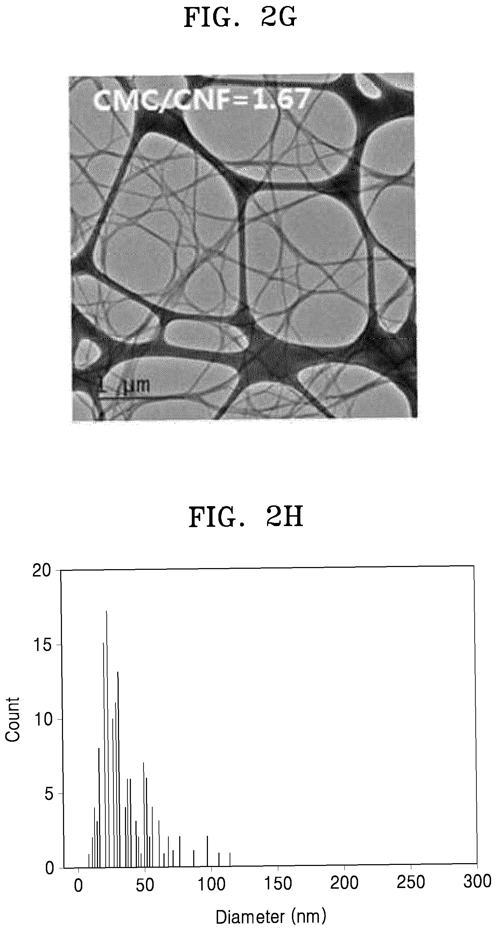

FIGS 2A- 2D and 2E-2H show a shape (FIGS. 2A-2D) and a diameter distribution (FIGS. 2E-2H) of defibrated CNF according to the CMC content. In FIG. 2, the shape and the diameter distribution of CNF were measured as follows. For measurement of the diameter of the cellulose nanofiber, several images of a CNF solution diluted at 0.05 wt% were obtained by TEM (FEI, Titan Cubed G2 60-300 model), and diameters of 100 to 200 cellulose nanofibers were measured. Then, an average diameter was calculated. In FIGS. 2A, B, C, and D represent the shape of CNF at a ratio of CMC/CNF (wt/wt) of 0, 0.056, 0.56, and 1.67, respectively, and FIGS. 2E, F, G, and H represent diameter distributions of CNFs of FIGS. 2A, B, C, and D, respectively.

### 5. Properties of CNF according to Number of Passes through HPH

A defibrated cellulose, that is, cellulose nanofiber (CNF) was obtained in the same manner as Section 2, except that CMC of Mw=250,000 was added as the disintegrating agent at a ratio of CMC/CNF(wt/wt) of 1.67, and the number of passes through HPH was 2, 5, 7, and 10 times.

**[Table 3]**

| Property | Number of passes through HPH | | | |
|---|---|---|---|---|
| | 2 | 5 | 7 | 10 |
| CNF diameter (nm) | 31±21 | 33±18 | 27±17 | 20±14 |
| Zeta potential (mV) | -10.7±2.3 | -52.5±2.0 | -47.7±0.2 | -52,2±1.1 |

As shown in Table 3, as the number of passing the CMC-added cellulose suspension through the microchannel of HPH increased, CNFs of 100 nm or more was reduced, indicating defibration into CNF with a uniform diameter. Further, zeta potential measurement showed that after five or more passes, CMC bound to CNF to lower a surface charge value, indicating improvement of dispersity of CNF in the dispersion.

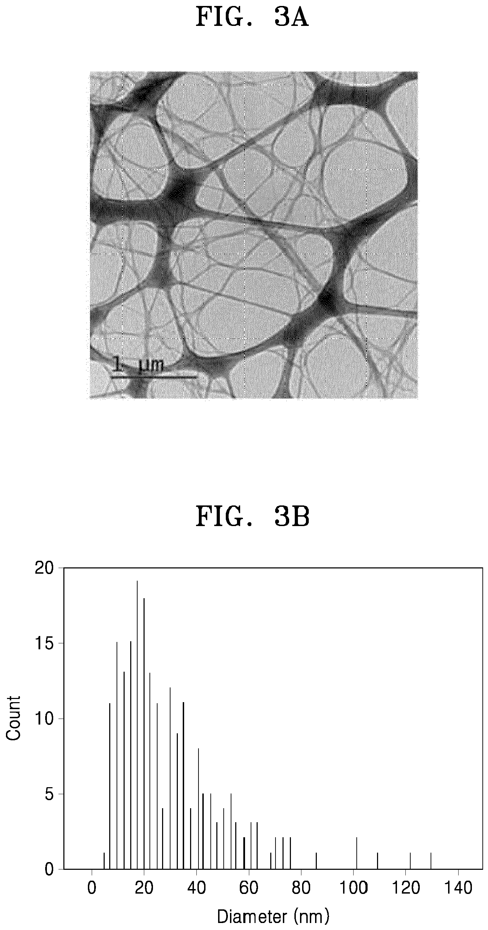

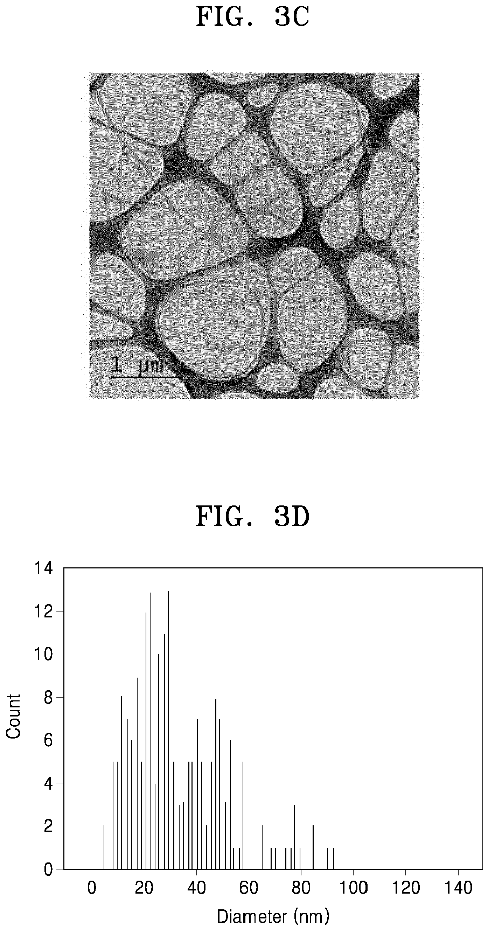

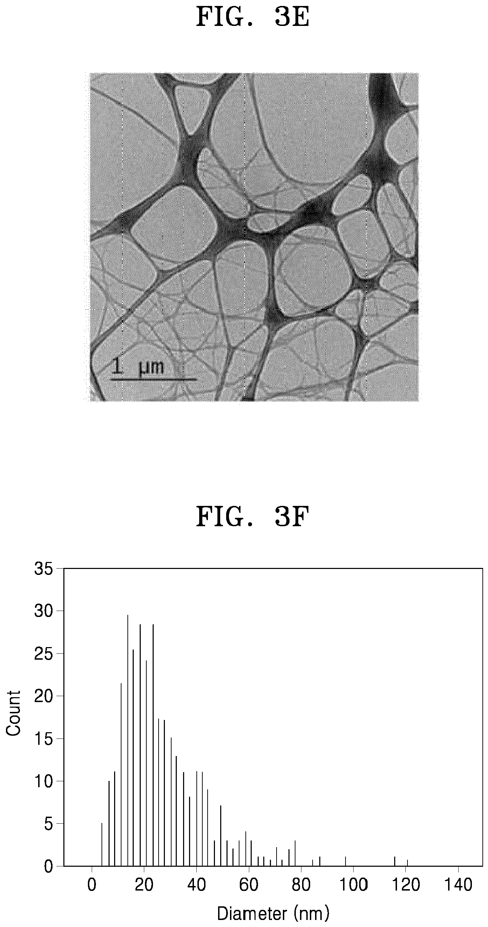

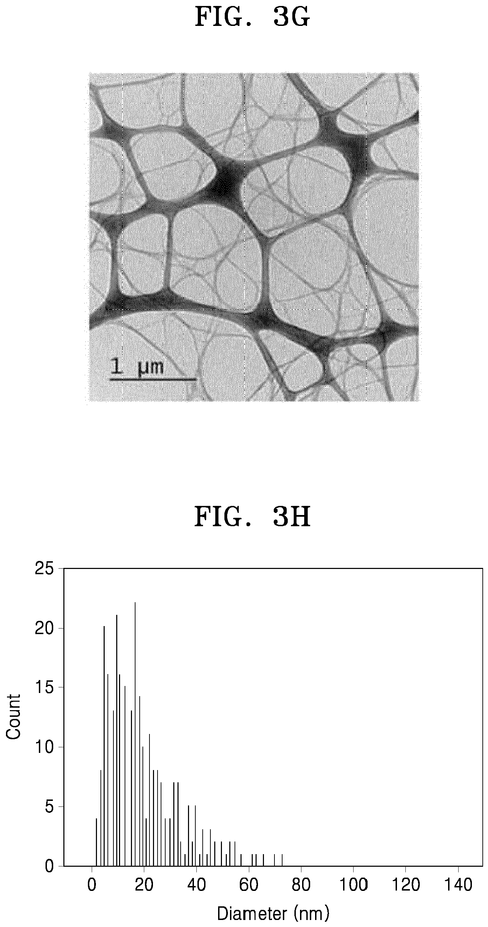

FIGS. 3A-D and 3E-3H show a shape (FIGS. 3A-D) and a diameter distribution (FIGS. 3E-H) of defibrated CNF according to the number of passes through HPH. In FIG. 3, the shape and the diameter distribution of CNF were measured in the same manner as in FIG. 1. In FIG. 3, A, B, C, and D represent the shape of CNF after 2, 5, 7, and 10 passes through HPH, respectively, and E, F, G, and H represent diameter distributions of CNFs of A, B, C, and D, respectively.

### 6.Properties of nonwoven fabric sheet or separator according to Number of Passes through HPH

A defibrated cellulose, that is, cellulose nanofiber (CNF) was obtained in the same manner as Section 2, except that CMC of Mw=250,000 was added as the disintegrating agent in an amount of 2 g, and the number of passes through HPH was 2 times (hereinbelow, referred to as "HPH2p w 250kCMC") and 10 times (hereinbelow, referred to as "HPH10p w 250kCMC"). The obtained CNFs were used to produce nonwoven fabric sheet or separators according to the method described in Section 3, and their properties were measured.

**[Table 4]**

| Property | Sample | |
|---|---|---|
| | HPH 2P w CMC250k | HPH 10P w CMC250k |
| Thickness (µm) | 10 | 12 |
| Porosity (%) | 45 | 49 |
| Air permeability (s/100 cc) | 838 | 632 |
| Tensile strength (MPa) | 104 | 105 |

As shown in Table 4, when CMC (Mw=250,000) was added as the disintegrating agent, and the number of passes through HPH was 2 times or 10 times, tensile strength was increased to about 100 Mpa or more, but not higher than that of the nonwoven fabric sheet or separator produced by using CMC (Mw=90,000) as shown in Table 1.

In this Example, CMC was used as the disintegrating agent, but it is only for illustrative purposes. The disintegrating agent may be water soluble cellulose. The water soluble cellulose may be CMC or 2-hydroxyethyl cellulose.

All references, including publications, patent applications, and patents, cited herein are hereby incorporated by reference to the same extent as if each reference were individually and specifically indicated to be incorporated by reference and were set forth in its entirety herein.

The use of the terms "a" and "an" and "the" and "at least one" and similar referents in the context of describing the invention (especially in the context of the following claims) are to be construed to cover both the singular and the plural, unless otherwise indicated herein or clearly contradicted by context. The use of the term "at least one" followed by a list of one or more items (for example, "at least one of A and B") is to be construed to mean one item selected from the listed items (A or B) or any combination of two or more of the listed items (A and B), unless otherwise indicated herein or clearly contradicted by context. The terms "comprising," "having," "including," and "containing" are to be construed as open-ended terms (i.e., meaning "including, but not limited to,") unless otherwise noted. Recitation of ranges of values herein are merely intended to serve as a shorthand method of referring individually to each separate value falling within the range, unless otherwise indicated herein, and each separate value is incorporated into the specification as if it were individually recited herein. All methods described herein can be performed in any suitable order unless otherwise indicated herein or otherwise clearly contradicted by context. The use of any and all examples, or exemplary language (e.g., "such as") provided herein, is intended merely to better illuminate the invention and does not pose a limitation on the scope of the invention unless otherwise claimed. No language in the specification should be construed as indicating any non-claimed element as essential to the practice of the invention.

Preferred embodiments of this invention are described herein, including the best mode known to the inventors for carrying out the invention. Variations of those preferred embodiments may become apparent to those of ordinary skill in the art upon reading the foregoing description. The inventors expect skilled artisans to employ such variations as appropriate, and the inventors intend for the invention to be practiced otherwise than as specifically described herein. Accordingly, this invention includes all modifications and equivalents of the subject matter recited in the claims appended hereto as permitted by applicable law. Moreover, any combination of the above-described elements in all possible variations thereof is encompassed by the invention unless otherwise indicated herein or otherwise clearly contradicted by context.

## Claims

1. A method of producing a nonwoven fabric, the method comprising:
passing a cellulose suspension comprising a microbial cellulose and a disintegrating agent in a medium through an orifice of a high-pressure homogenizer to obtain a cellulose dispersion, wherein the disintegrating agent is a water-soluble cellulose, wherein passing the cellulose suspension is performed while applying pressure thereto, wherein the pressure is about 10 MPa to about 300 MPa; and
removing the medium from the obtained cellulose dispersion to form the nonwoven fabric.

2. The method of claim 1, wherein the cellulose suspension is subjected to a pressure drop of 50 MPa or more and a shearing action in the high pressure homogenizer, followed by a bombardment against a solid surface in the high pressure homogenizer.

3. The method of claim 1 or 2, wherein the passing is repeated until the cellulose suspension becomes a stable suspension; and/or
wherein the passing converts the microbial cellulose into a cellulose nanofiber (CNF); and/or
wherein the water-soluble cellulose is selected from the group consisting of CMC, 2-hydroxyethyl cellulose, and water-soluble cellulose ether; and/or
wherein the cellulose suspension comprises the disintegrating agent in an amount of 1% to 200% by weight, based on the weight of microbial cellulose in the cellulose suspension; and/or
wherein the medium is an aqueous medium; and/or
wherein the nonwoven fabric has a tensile strength of 39 MPa to 290 MPa, and the tensile strength is measured in accordance with ASTM D882.

4. The method of any of claims 1 to 3, wherein the removing the medium comprises at least one selected from the group consisting of evaporating, filtering, centrifuging, and compressing the obtained cellulose dispersion.

5. The method of any of claims 1 to 4, further comprising shaping the obtained cellulose dispersion from the step of passing into a sheet form, preferably
wherein the shaping comprises coating the obtained cellulose dispersion onto a substrate to form a sheet.

6. The method of claim 5, wherein the sheet obtained from the step of "removing" has a thickness of 5 µm to 30 µm.

7. The method of claim 2, wherein the high velocity shearing action is a right angle shearing action relative to the direction of flow through the orifice.

8. The method of any of claims 1 to 7, wherein the passing is repeated 1 to 10 times.

9. The method of any of claims 1 to 8, wherein the disintegrating agent is CMC having a molecular weight of 60,000 Da to 500,0000 Da.

10. The method of any of claims 1 to 9, further comprising removing the disintegrating agent from the obtained cellulose dispersion.

11. The method of any of claims 1 to 10, wherein the method further comprises mixing the obtained cellulose dispersion with a pore forming agent in an aqueous medium before the step of removing.

12. The method of claim 11, wherein the pore forming agent is selected from the group consisting of polyethylene glycol (PEG), polypropylene alcohol, polypropylene and hydroxy cellulose.

13. The method of any of claims 1 to 12, wherein the cellulose suspension comprises 0.1% to 1% by weight of microbial cellulose, based on the total weight of the suspension.

14. A cellulose nonwoven fabric produced by the method of any of claims 1 to 13.

15. A lithium ion battery comprising a nonwoven fabric of claim 14 as a separator.
